## Europäisches Patentamt

## European Patent Office

## Office européen des brevets

(19)

(11) Veröffentlichungsnummer: **0 022 449**
A2

(12) # EUROPÄISCHE PATENTANMELDUNG

(21) Anmeldenummer: **80101827.6**

(51) Int. Cl.³: **A 01 K 61/02,** A 01 K 39/01

(22) Anmeldetag: **04.04.80**

(30) Priorität: **11.07.79 DE 2927960**

(71) Anmelder: **Gunther Eheim Fabrik elektromechanischer Erzeugnisse, Plochinger Strasse 32, D-7301 Deizisau (DE)**

(43) Veröffentlichungstag der Anmeldung: **21.01.81 Patentblatt 81/3**

(72) Erfinder: **Wiedenmann, Walter, Hohenstaufenstrasse 44, D-7301 Deizisau (DE)**

(84) Benannte Vertragsstaaten: **AT BE CH FR GB IT LI LU NL SE**

(74) Vertreter: **Patentanwäite Dipl.-Ing. W. Scherrmann Dr.-Ing. R. Rüger, Webergasse 3, D-7300 Esslingen (DE)**

(54) **Selbsttätige Fütterungsvorrichtung, insbesondere für Aquarien.**

(57) Bei einer selbsttätigen Fütterungsvorrichtung zur portionsweisen Ausgabe von schüttbarem Futter, insbesondere für Aquarien, sind ein das Futter aufnehmender Vorratsbehälter und eine mit diesem zusammenwirkende, in vorbestimmter zeitlicher Abhängigkeit gesteuerte Futterausgabevorrichtung vorgesehen, durch die bemessene Futterportionen durch eine Ausgabeöffnung (17) ausbringbar sind.

Um zu erreichen, daß bei einfachem bedienungs- und wartungsfreundlichem Aufbau der Fütterungsvorrichtung die abgegebene Futtermenge weitgehend unabhängig von dem Füllzustand des Vorratsbehälters ist, ist der Vorratsbehälter in Gestalt einer drehbar gelagerten, im wesentlichen liegend angeordneten, die Ausgabeöffnung (17) aufweisenden Trommel (9) ausgebildet, die von einer Antriebsvorrichtung (2) in vorbestimmten Zeitabständen aus einer Ruhestellung, in der die Ausgabeöffnung (17) gegen Futteraustritt gesichert ist, herausdrehbar ist, wobei die Futterausgabevorrichtung (18 bis 23) in Abhängigkeit von der Trommeldrehbewegung selbsttätig gesteuert ist.

- 1 -

Firma Gunther Eheim, Plochinger Straße 32,
73o1 Deizisau

Selbsttätige Fütterungsvorrichtung insbesondere
für Aquarien

Die Erfindung betrifft eine selbsttätige
Fütterungsvorrichtung zur portionsweisen Ausgabe von schüttbarem Futter, insbesondere für
Aquarien, mit einem das Futter aufnehmenden
Vorratsbehälter und einer mit diesem zusammenwirkenden, in vorbestimmter zeitlicher Abhängigkeit gesteuerten Futterausgabe-Vorrichtung,
durch die bemessene Futterportionen durch eine
Ausgabeöffnung ausbringbar sind.

Um beispielsweise bei Aquarien in regelmäßigen
Abständen eine gleichmäßige Fütterung der Fische
vorzunehmen, ist in der Praxis u.a. eine selbsttätige Fütterungsvorrichtung bekanntgeworden,
deren Futtervorrats-Behälter in einem durch
einen abnehmbaren Deckel verschließbaren Gehäuse
angeordnet ist, das auf eine Abdeckung des Aquarienbeckens
aufgesetzt werden kann. Der Boden des Vorratsbehälters ist
durch ein Förderband der Futterausgabe-Vorrichtung gebildet,
das zu vorbestimmten Zeitpunkten von einer Antriebsvorrichtung in Bewegung gesetzt wird und dabei durch die Ausgabe-

- 2 -

öffnung des Gehäuses Futter ausbringt, das in das Aquariumbecken fällt. Die Menge des ausgebrachten Futters hängt von der Laufzeit des Förderbandes ab. Tatsächlich ist die ausgebrachte Futtermenge aber auch abhängig von dem Füllzustand des Vorratsbehälters und von der Art des darin befindlichen Futters. Außerdem kann über den Förderband-Mechanismus Feuchtigkeit in den Vorratsbehälter eindringen, mit dem Ergebnis, daß bei feuchtigkeitsempfindlichem Futter, beispielsweise dünnen Futterblättchen, das Futter teilweise zusammenbackt und damit die Futterausgabe noch unregelmäßiger wird. Davon abgesehen ist die Reinigung der ganzen Vorrichtung und insbesondere auch deren Vorratsbehälter verhältnismäßig umständlich und nicht ohne eine gewisse Geschicklichkeit zu bewerkstelligen.

Aufgabe der Erfindung ist es deshalb, eine selbsttätige Fütterungsvorrichtung, insbesondere für Aquarien zu schaffen, die sich bei einfachem betriebssicheren Aufbau dadurch auszeichnet, daß die jeweils abgegebene Futtermenge weitgehend unabhängig von dem Füllzustand des Vorratsbehälters ist und daß die Bedienung und Wartung der Vorrichtung ohne Mühe und Fachkenntnisse ermöglicht sind.

Zur Lösung dieser Aufgabe ist die eingangs genannte Fütterungsvorrichtung erfindungsgemäß dadurch gekennzeichnet, daß der Vorratsbehälter in Gestalt einer drehbar gelagerten, im wesentlichen liegend angeordneten und einenends verschlossenen Trommel ausgebildet ist, die die Ausgabeöffnung

- 3 -

aufweist und von einer zeitabhängig gesteuerten, mit ihr zusammenwirkenden Antriebsvorrichtung in vorbestimmten Zeitabständen aus einer Ruhestellung, in der die Ausgabeöffnung gegen Futteraustritt gesichert ist, herausdrehbar ist und daß die Ausgabevorrichtung in Abhängigkeit von der Trommeldrehbewegung selbsttätig gesteuert ist. Die Ausbildung des Vorratsbehälters in Gestalt einer liegend angeordneten drehbaren Trommel ergibt einen sehr einfachen Aufbau der Fütterungsvorrichtung, der eine entsprechend bequeme Reinigung und Füllung des Vorratsbehälters gestattet. Auch läßt sich bei einer solchen Trommel, bei der zufolge ihrer liegenden Anordnung das auf dem unteren Bereich der Innenwand aufliegende Futter bei der Drehbewegung zu der Ausgabeöffnung gelangt, ohne weiteres sicherstellen, daß die durch die Ausgabeöffnung abgegebene Futtermenge im wesentlichen unabhängig von dem Füllzustand ist.

Die Ausgabeöffnung ist in einer bevorzugten Ausführungsform im Bereiche einer Stirnseite der Trommel angeordnet, während die Ausgabevorrichtung eine im Trommelinneren angeordnete und mit der Trommel umlaufende schaufelartige Futterleitfläche aufweisen kann, die seitlich der Trommeldrehachse von der Trommelinnenwand vorstehend und mit einer Kante zu der Ausgabeöffnung hinweisend vorgesehen ist. Bei der Drehbewegung der Trommel wird von der schaufelartigen Futterleitfläche immer eine vorbestimmte Futterportion abgeteilt und durch die Ausgabeöffnung nach außen transportiert.

Die Futterleitfläche kann bezüglich der Ausgabeöffnung verstellbar sein, um damit die Größe der ausgegebenen Futtermenge zu verändern. Zu dem gleichen Zwecke kann es zweckmäßig sein, die Ausgabeöffnung in ihrem wirksamen Durchtrittsquerschnitt verstellbar auszubilden.

Sehr günstige Ausgabeverhältnisse für das Futter ergeben sich, wenn die Ausgabeöffnung in den Mantel eines von der Stirnseite her trichterartig in den Trommelinnenraum ragenden konischen Ausgabeteiles angeordnet ist. Das durch die Ausgabeöffnung austretende Futter wird dadurch wie durch einen Trichter nach außen transportiert, womit sich ein verhältnismäßig schmaler Schüttstrahl des Futters ergibt und ein Umherschleudern von Futterteilchen ausgeschlossen ist.

Die Trommel kann mit Vorteil einen die Ausgabeöffnung enthaltenden, in einer vorbestimmten Stellung lösbar aufgesetzten Deckel aufweisen, der nach der Abnahme eine bequeme Reinigung und Füllung der Trommel gestattet. Um zu vermeiden, daß bei in der Ruhestellung stehender Trommel, insbesondere über längere Zeiträume hinweg, über die Ausgabeöffnung Feuchtigkeit in die Trommel eintritt, kann die Fütterungsvorrichtung eine beweglich gelagerte Verschlußklappe für die Ausgabeöffnung aufweisen, die unmittelbar durch die Trommel zwischen einer wirksamen und einer unwirksamen Stellung, in Abhängigkeit von der Trommeldrehbewegung, verstellbar ist.

- 5 -

Die mit im wesentlichen horizontaler Drehachse
gelagerte Trommel selbst kann mit Vorteil kreiskegelstumpfförmig ausgebildet sein, wobei die
Ausgabeöffnung im Bereiche ihrer Stirnseite
größeren Durchmessers angeordnet ist. Damit
wird ein leichterer Transport des Futters zu
der Ausgabeöffnung hin erreicht. Grundsätzlich
wäre es aber auch denkbar, die Anordnung derart
zu treffen, daß die Trommel selbst mit einer
schräg liegenden Drehachse gelagert ist, derart, daß ihre jeweils unten liegende Erzeugende
in Richtung zu der die Ausgabeöffnung enthaltenden Stirnseite weist.

Zweckmäßig ist es, wenn die Trommel in einem sie
allseitig umschließenden Gehäuse gelagert ist,
das eine abnehmbare und die Entnahme der Trommel
gestattende Haube sowie einen mit der Auslauföffnung der Trommel in Verbindung stehenden Futterauslauf aufweist. Das Gehäuse gestattet es,
nach Abnahme der Haube die Trommel zu entnehmen,
so daß sie als Teil für sich gereinigt und gefüllt werden kann, während andererseits bei geschlossener Haube die ganze Fütterungsvorrichtung
eine Einheit bildet, die bei geringem Platzbedarf
ein ästhetisch einwandfreies Aussehen hat.

Die Antriebsvorrichtung kann mit Vorteil ein
Zeitschaltwerk aufweisen, durch das zu programmierten Zeitpunkten wenigstens ein in einen
Außenstromkreis einfügbares elektrisches Kontaktpaar schaltbar ist. Auf diese Weise ist es möglich,

beispielsweise unmittelbar vor Fütterungsbeginn, die Beleuchtung eines Aquariums einzuschalten und sie nach Abschluß des Fütterungsvorganges wieder abzuschalten oder die Einschaltung einer Absaugpumpe und dergleichen anzusteuern, ohne daß dafür eigene Zeitschaltwerke
oder -geräte erforderlich wären.

Dabei ergeben sich sehr einfache konstruktive
Verhältnisse, wenn zwischen der Trommel und
der Antriebsvorrichtung eine lösbare Kupplung angeordnet ist, deren Einrückung durch das Zeitschaltwerk gesteuert ist. In einer praktischen Ausführungsform kann dazu
die Anordnung derart getroffen sein, daß die Trommel mit einer
mit einem Ritzel der Antriebsvorrichtung zusammenwirkenden
Antriebsverzahnung versehen ist, die an einer vorbestimmten Stelle eine Lücke aufweist, wobei die
Trommel durch eine von dem Zeitschaltwerk angesteuerte Schaltklinke bei in der Verzahnungslücke stehendem Ritzel um einen das Ritzel in
Eingriff mit der Antriebsverzahnung bringenden
Winkelwert weiterschaltbar ist.

Das von dem Zeitschaltwerk angesteuerte Kontaktpaar kann mit den Kontakten einer Steckdose verbunden sein, die in einer zweckmäßigen Ausführungsform auch im Zuge der Netzzuleitung der Antriebsvorrichtung liegen kann. Damit ist es
möglich, die erwähnten Zusatzgeräte wie Beleuchtung, Absaugpumpe und dergleichen mit den üblichen
Steckern an das Zeitschaltwerk der Fütterungsvorrichtung anzuschließen und sie von diesem steuern
zu lassen.

In der Zeichnung ist ein Ausführungsbeispiel des Gegenstandes der Erfindung dargestellt. Es zeigen

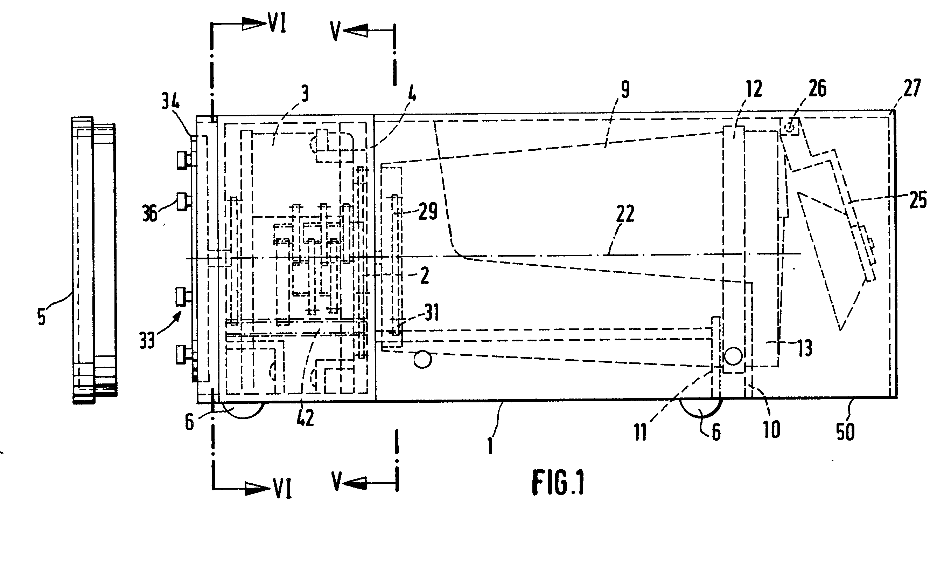

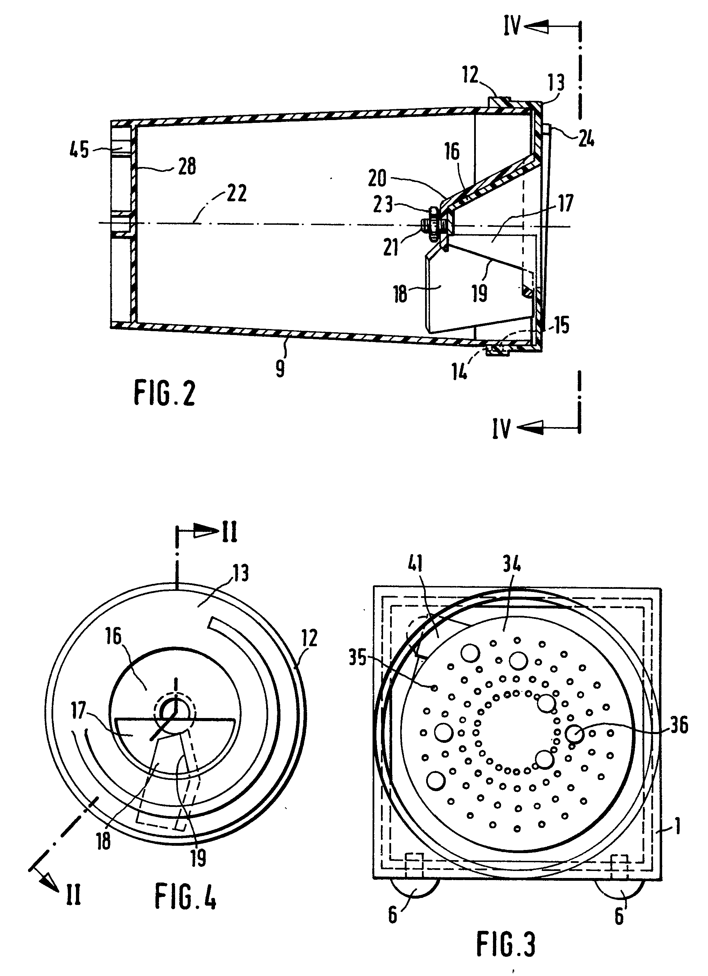

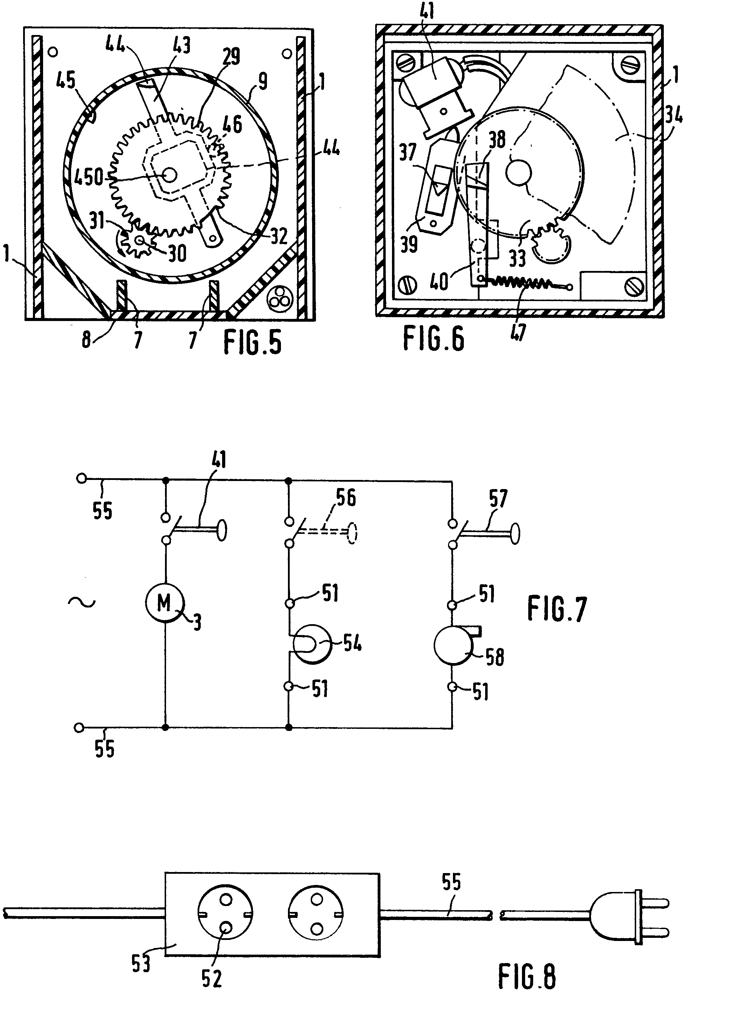

Figur 1 eine Fütterungsvorrichtung gemäß der Erfindung, in einer Seitenansicht mit abgenommenem stirnseitigen Deckel, Figur 2 die den Futtervorratsbehälter bildende Trommel der Fütterungsvorrichtung nach Figur 1, geschnitten längs der Linie II-II der Figur 4, in einer Seitenansicht, Figur 3 die Fütterungsvorrichtung nach Figur 1, in einer Draufsicht auf die den Bedienungsteilen des Zeitschaltwerkes zugeordnete Stirnseite, Figur 4 die Trommel nach Figur 2, in einer Seitenansicht entsprechend den Pfeilen IV-IV der Figur 2, Figur 5 die Fütterungsvorrichtung nach Figur 1, geschnitten längs der Linie V-V der Figur 1 in einer Seitenansicht, Figur 6 die Fütterungsvorrichtung nach Figur 1, geschnitten längs der Linie VI-VI der Figur 1 in einer Seitenansicht, Figur 7 ein schematisches Schaltdiagramm des Zeitschaltwerkes und der Antriebsvorrichtung der Fütterungsvorrichtung nach Figur 1 und Figur 8 eine Ausführungsform der Steckkontakte für den Anschluß von Außengeräten bei der Fütterungsvorrichtung nach Figur 1, in einer Draufsicht und in einem anderen Maßstab.

Die in Figur 1 dargestellte Fütterungsvorrichtung dient insbesondere zum Füttern von Fischen in Aquarien; sie kann aber auch zum Füttern anderer Tiere, etwa von Vögeln verwendet werden, wie es auch denkbar ist, sie in größerer Ausführungsform

zur Fischfütterung in Teichen einzusetzen, um nur ein weiteres Beispiel zu nennen.

Die Fütterungsvorrichtung weist ein im wesentlichen kastenartiges Kunststoffgehäuse 1 auf, das in seinem vorderen Teil eine Antriebsvorrichtung 2 in Gestalt eines durch einen Elektromotor 3 angetriebenen Zahnradgetriebe enthält. Die Antriebsvorrichtung ist gegen den übrigen Teil des Gehäuses 1 durch eine Trennwand 4 abgeschlossen, während auf der der Trennwand 4 gegenüberliegenden Seite in das Gehäuse 3 ein bei 5 angedeuteter Deckel eingesetzt werden kann, der damit einen hermetischen Abschluß der Antriebsvorrichtung 2 und deren zugeordneter Elemente nach außen hin gewährleistet.

Das Gehäuse 1 steht auf vier Gummifüßen 6 und ist in seinem an die Trennwand 4 rechts (Figur 1) anschließenden Teil unten mit zwei parallel zueinander angeordneten Lagerleisten 7 versehen, die an einem unteren Gehäuseteil 8 aufrechtstehend angeordnet sind und auf denen eine Kunststofftrommel 9 drehbar gelagert ist. Die Kunststofftrommel 9 ist in Gestalt eines Kreiskegelstumpfes angebildet; sie liegt jeweils mit zwei Mantellinien auf den entsprechend schräg verlaufenden Oberkanten der beiden Lagerleisten 7 auf, wobei sie axial durch zwei an dem Gehäuseteil 8 angeformte Flanschteile 1o, 11 gesichert ist, zwischen die mit axialem Spiel ein Ringbund 12 eines stirnseitig auf die Trommel 9 aufgesetzten Deckels 13 eingreift. Der reibschlüssig auf der Trommel 9

- 9 -

gehalterte Deckel 13 ist mit einem Schlitz 14 (Figur 2) versehen, in den eine Nase 15 der Trommel 9 eingreift, womit sichergestellt ist, daß der Deckel 13 immer in einer vorbestimmten Winkellage zu der Trommel 9 sitzt.

An dem Deckel 13 ist ein trichterartig nach innen ragendes konisches Ausgabeteil 16 angeformt, in dessen Mantel eine Ausgabeöffnung 17 für das in der Trommel 9 befindliche, nicht weiter angedeutete Futter angeordnet ist. Mit der Ausgabeöffnung 17 wirkt eine Futterausgabevorrichtung zusammen, die mit einer schaufelartigen Futterleitfläche 18 versehen ist, welche mit einer Kante 19 an dem konischen Ausgabeteil 16 anliegt und damit zu der Ausgabeöffnung 17 hinweist. Die Futterleitfläche 19 ist an einem konischen Lagerteil 2o befestigt, das auf das konische Ausgabeteil 16 in der aus Figur 2 ersichtlichen Weise aufgesetzt und an diesem mittels eines zu der Trommeldrehachse 22 koaxialen Lagerbolzens 21 drehbar gelagert ist. Auf den Lagerbolzen 21 ist eine Sicherungsmutter 23 aufgeschraubt.

Das Lagerteil 2o deckt - abhängig von seiner jeweiligen Winkelstellung - die Ausgabeöffnung 17 teilweise ab, wie dies aus Figur 4 zu entnehmen ist. Mit der Verstellung des Lagerteiles 2o wird gleichzeitig auch die seitlich der Trommeldrehachse 22 an der Trommelinnenwand vorstehend, anliegende schraubenartig schräg zu der Trommeldrehachse 22 geneigte Futterleitfläche 18 mit gedreht; so daß die Kante 19 immer zu der Ausgabeöffnung 17 hinweist.

Auf der Außenseite des Deckels 13 ist eine spiralförmige Nockenbahn 24 angeordnet, auf der sich
unter der Wirkung ihres Eigengewichtes eine Verschlußklappe 25 abstützt, die bei 26 an einer
auf den rechts der Trennwand 4 liegenden Teil des
Gehäuses 1 (Figur 1) lösbar aufgesetzten Haube 27
um eine horizontale Achse schwenkbar gelagert ist.
Die Verschlußklappe 25 ist derart gestaltet, daß
sie in der in Figur 1 dargestellten unwirksamen
Stellung die Ausgabeöffnung 17 freigibt und in
ihrer wirksamen Stellung an dem Deckel 13 derart
dicht anliegt, daß sie die nach außen führende
Öffnung des Ausgabeteiles 16 und damit auch die
Ausgabeöffnung 17 abdichtet.

Auf der dem Deckel 13 gegenüberliegenden Stirnseite
ist die Trommel 9 durch eine Bodenwand 28 verschlossen, auf deren Außenseite ein zu der Drehachse 22
koaxiales Antriebszahnrad 29 angeordnet ist, das
mit einem mittels einer Welle 3o (Figur 5) durch
die Trennwand hindurchgeführten Antriebsritzel 31
der Antriebsvorrichtung 2 in Eingriff kommen kann.
Die Verzahnung des Antriebszahnrades 29 ist in
der aus Figur 5 ersichtlichen Weise mit einer Verzahnungslücke 32 ausgebildet, was bedeutet, daß
das Antriebsritzel 31 das Antriebszahnrad 29 nicht
antreiben kann, wenn die Verzahnungslücke 32
über dem Antriebsritzel 32 steht.

Der Antriebsvorrichtung 2 ist ein Zeitschaltwerk 33
an sich bekannter Bauart zugeordnet, das eine von
einem zeithaltenden elektrischen Uhrwerk angetriebene Programmscheibe 34 aufweist, welche mit auf verschiedenen Radien liegenden Programmbohrungen 35 versehen ist (Figur 3). In die Programmbohrungen 35 können programmgemäß Programmstöpsel 36 eingesteckt werden, die mit auf der Rückseite der Programmscheibe 34 angeordneten Betätigungsnocken 37, 38 zusammenwirken, von denen zwei in Figur 6 dargestellt sind und die jeweils auf einem schwenkbar gelagerten Betätigungsglied 39 bzw. 40 sitzen. Die Betätigungsnocken 37, 38 sind jeweils verschiedenen Radien der Programmbohrungen 35 der Programmscheibe 34 zugeordnet.

Das Betätigungsglied 39 kann bei seiner Verschwenkung im Gegenuhrzeigersinn aus der in Figur 6 dargestellten Stellung einen Quecksilberneigungsschalter 41 umstellem, der den Elektromotor 3 der Antriebsvorrichtung 2 ans Netz legt und damit das Antriebsritzel 31 in Umdrehungen versetzt. Das andere Betätigungsglied 40 ist über eine in dem Gehäuse 1 drehbar gelagerte horizontale Welle 42 mit einem auf der rechten Seite (Figur 1) der Trennwand 4 liegenden Klinkenschalthebel 43 drehfest gekuppelt, der endseitig eine Schaltklinke 44 trägt, die mit einem Schaltnocken 45 im Bereiche des stirnseitigen Endes der Schalttrommel 9 zusammenwirkt. Der Klinkenschalthebel 43 ist im übrigen mittels eines Lagerauges zwischen zwei Bolzen 450, 46 (Figur 5) der Trennwand 4 begrenzt verschwenkbar gehaltert; sein zugeordnetes Betätigungsglied 40 ist durch eine einseitig an dem Gehäuse 1 verankerte Zugfeder elastisch in der aus Figur 6 dargestellten Stellung gehalten.

Die insoweit beschriebene Fütterungsvorrichtung
arbeitet wie folgt:

Nach dem Öffnen der Haube 27 kann die Trommel 9
einfach aus dem Gehäuse 1 dadurch entnommen werden, daß sie von den Führungsleisten 7 abgehoben
wird. Die Trommel 9 wird bei abgenommenem Deckel
13 mit körnigem, blättrigem, granuliertem oder
anderem schüttfähigem Futter gefüllt und anschließend wieder durch den Deckel 13 verschlossen, der durch den Stift 15 lagerichtig bezüglich
der Verzahnung des Antriebszahnrades 29 fixiert ist.
Nachdem die gefüllte Trommel 9 wieder in der aus
Figur 1 ersichtlichen Weise in das Gehäuse 1
eingesetzt und die Haube 27 geschlossen ist, ist
die Fütterungsvorrichtung betriebsbereit.

Die Programmstöpsel 36 sind derart in die Programmbohrungen 35 der Programmscheibe 34 eingesteckt, daß zu einem vorgewählten Zeitpunkt ein
Programmstöpsel auf den Betätigungsnocken 37 des
Betätigungsgliedes 39 (Figur 6) aufläuft und
dieses im Gegenuhrzeigersinn verschwenkt, womit
der Quecksilberneigungsschalter 41 im Uhrzeigersinn, bezogen auf Figur 6, geschwenkt und der
Antriebsmotor 3 eingeschaltet werden. Die Trommel
9 war derart in das Gehäuse 1 eingesetzt worden,
daß das Antriebsritzel 31 in der Verzahnungslücke
32 des Antriebszahnrades 29 liegt. Demgemäß ist
die von dem Antriebsritzel 31 und dem Antriebszahnrad 29 gebildete Kupplung zwischen der Antriebsvorrichtung 2 und der Trommel 9 gelöst,
während die Auslauföffnung 17 oben steht und gegen Futteraustritt gesichert ist.

- 13 -

Entweder gleichzeitig oder kurze Zeit später trifft ein entsprechend gesetzter, auf einer radial weiter innen liegenden Kreisbahn bewegter zweiter Programmstöpsel auf den Betätigungsnocken 38 des Betätigungsgliedes 40, das damit verschwenkt wird, womit die Welle 42 verdreht und mit dieser der Klinkenschalthebel 43 verschwenkt werden. Bei in der erwähnten ausgekuppelten Stellung stehendem Antriebszahnrad 29 liegt der Schaltnocken 45 der Trommel 9 an der Sperrklinke 44 an, so daß bei einer Verschwenkung des Klinkenschalthebels 43 in die in Figur 5 dargestellte Stellung, über den Schaltnocken 45 die Trommel 9 um einen bestimmten Winkelwert verdreht wird, der so groß ist, daß das Antriebsritzel 31 nunmehr mit der Verzahnung des Antriebszahnrades 29 in Eingriff kommt.

Die liegend angeordnete Trommel 9 wird nunmehr um ihre horizontale Drehachse 22 in Umdrehung versetzt. Dabei rutscht das in der Trommel 9 enthaltene Futter wegen der schrägen Lage der jeweils zu unterst liegenden Erzeugenden auf das der Abgabeöffnung 17 zugeordnete stirnseitige Ende der Trommel 9 zu. Die schaufelartige Futterleitfläche 19 wird im Verlaufe der Drehbewegung mit einer bestimmten Futterportion beladen, die sie aus dem Futtervorrat bei fortgesetzter Trommelumdrehung heraushebt und schließlich über die Kante 19 und die Ausgabeöffnung 17 ausbringt. Die ausgebrachte Futtermenge fällt auf die trichterförmige, außenliegende Wandung des konischen Ausgabeteiles 16, von wo aus sie - bezogen auf Figur 2 - nach rechts gleitet bis sie aus der Trommel 9 herausfällt.

- 14 -

Um diesen Austritt der abgeteilten Futtermenge zu ermöglichen, hatte die Nockenbahn 24 zu Beginn der Drehbewegung der Trommel 9, d.h. während der Beladung der schaufelförmigen Futterleitfläche 18 die Verschlußklappe 25 in die in Figur 1 dargestellte unwirksame Stellung abgehoben, so daß die Verbindung zwischen der Ausgabeöffnung 17 und einem an der Haube 27 unten vorgesehenen Futterauslaß 5o hergestellt wurde, durch den die portionierte Futtermenge in das darunter befindliche Aquariumbecken fällt.

Die Drehbewegung der Trommel 9 hält solange an, bis die Verzahnungslücke 32 wiederum über das Antriebsritzel 31 zu liegen kommt, so daß die Kupplung zwischen der Trommel 9 und der Antriebsvorrichtung 2 gelöst ist. Bei dieser Bewegung kann der mit dreiecksförmigem Profil ausgebildete Schaltnocken 45 die entsprechend gestaltete Schaltklinke 44 gegen die Wirkung der Feder 47 überlaufen.

Zu einem vorbestimmten Zeitpunkt kommt ein entsprechend gesetzter Programmstöpsel 36 der Programmscheibe 34 mit der anderen Schaltfläche des Schaltnockens 37 des Betätigungsgliedes 39 in Eingriff womit, der Quecksilberneigungsschalter 41 in seine andere Stellung überführt wird und der Antriebsmotor 3 ausgeschaltet werden.

- 15 -

Die Ausbildung und Lagerung der Trommel 9 gewährleisten zusammen mit der schräg angeordneten Futterleitfläche 18, daß immer eine gleiche Futterportion durch die Ausgabeöffnung 17 nach außen "geschaufelt" wird, und zwar im wesentlichen unabhängig von dem Füllzustand der Trommel 9 - solange nur soviel Futter darin enthalten ist, daß die Futterleitfläche 18 vollständig beladen werden kann. Durch Verstellung des Lagerteiles 2o kann, wie bereits eingangs erwähnt, die Ausgabeöffnung 17 in ihrem lichten Durchtrittsquerschnitt verändert werden, womit auch eine Änderung der abgegebenen Futtermenge möglich ist. Beispielsweise parallel zu dem Antriebsmotor 3 kann ein Kontaktpaar 51 geschaltet sein, das damit durch den Quecksilberneigungsschalter 41 gemeinsam mit dem Antriebsmotor 3 an Spannung gelegt wird, wie aus Figur 7 zu ersehen ist. Das Kontaktpaar 51 kann mit den Steckkontakten 52 einer Steckdose 53 verbunden sein, die im Zuge einer bei 55 in Figur 8 angedeuteten Netzanschlußleitung liegt. In die Steckkontakte 52 der Steckdose 53 kann beispielsweise ein Beleuchtungskörper 54 (Figur 7) eingesteckt werden, womit erreicht wird, daß mit dem zeitabhängigen Einschalten des Antriebsmotors 3 und damit mit dem Fütterungsbeginn auch die Beleuchtung des Aquariums eingeschaltet wird. Soll die Einschaltung der Beleuchtung unabhängig von dem Fütterungsbeginn folgen, so braucht lediglich ein zweiter Quecksilberneigungsschalter 41 vorgesehen werden, der in entsprechender Weise über einen Betätigungsnokken und ein Betätigungsglied betätigt wird, welches von einem auf einem anderen Radius liegenden Programmstöpsel 36 in der beschriebenen Weise betätiqbar ist. Ein solches eigens gesteuertes Kontakpaar ist in Figur 7 bei 56 angedeutet. In entsprechender Weise kann durch ein in Figur 6 ebenfalls nicht weiter veranschaulichtes, aus Figur 7 ersichtliches Kontaktpaar 57 ein weiteres äußeres Gerät, etwa eine Absaugpumpe 58, zeitabhängig von dem Zeitschaltwerk 33 ein- oder ausgeschaltet werden.

Der Quecksilberneigungsschalter 41 kann naturgemäß auch durch einen anderen mit einem zweckmäßigen Antrieb versehenen Schalter, beispielsweise einen sog. Mikroschalter, ersetzt werden.

- 1 -

Patentansprüche:

1. Selbsttätige Fütterungsvorrichtung zur portionsweisen Ausgabe von schüttbarem Futter, insbesondere für Aquarien, mit einem das Futter aufnehmenden Vorratsbehälter und einer mit diesem zusammenwirkenden, in vorbestimmter zeitlicher Abhängigkeit gesteuerten Futterausgabevorrichtung, durch die bemessene Futterportionen durch eine Ausgabeöffnung ausbringbar sind, dadurch gekennzeichnet, daß der Vorratsbehälter in Gestalt einer drehbar gelagerten, im wesentlichen liegend angeordneten und einenends verschlossenen Trommel (9) ausgebildet ist, die die Ausgabeöffnung (17) aufweist und von einer zeitabhängig gesteuerten, mit ihr zusammenwirkenden Antriebsvorrichtung (2) in vorbestimmten Zeitabständen aus einer Ruhestellung, in der die Ausgabeöffnung (17) gegen Futteraustritt gesichert ist, herausdrehbar ist und daß die Ausgabevorrichtung (18 - 23) in Abhängigkeit von der Trommeldrehbewegung selbsttätig gesteuert ist.

2. Fütterungsvorrichtung nach Anspruch 1, dadurch gekennzeichnet, daß die Ausgabeöffnung (17) im Bereiche einer Stirnseite der Trommel (9) angeordnet ist.

- 2 -

3. Fütterungsvorrichtung nach Anspruch 1 oder 2, dadurch gekennzeichnet, daß die Ausgabevorrichtung (18 bis 23) eine im Trommelinnenraum angeordnete und mit der Trommel (9) umlaufende, schaufelartige Futterleitfläche (18) aufweist, die seitlich der Trommeldrehachse (22) von der Trommelinnenwandung vorstehend und mit einer Kante (19) zu der Ausgeböffnung (17) hinweisend angeordnet ist.

4. Fütterungsvorrichtung nach Anspruch 3, dadurch gekennzeichnet, daß die Futterleitfläche (18) bezüglich der Ausgabeöffnung (17) verstellbar ist.

5. Fütterungsvorrichtung nach Anspruch 3 oder 4, dadurch gekennzeichnet, daß die Ausgabeöffnung (17) mit ihrem wirksamen Durchtrittsquerschnitt verstellbar ist.

6. Fütterungsvorrichtung nach einem der Ansprüche 2 - 5, dadurch gekennzeichnet, daß die Ausgabeöffnung (17) in dem Mantel eines von der Stirnseite her trichterartig in den Trommelinnenraum ragenden konischen Ausgabeteils (16) angeordnet ist.

7. Fütterungsvorrichtung nach einem der Ansprüche 2 - 6, dadurch gekennzeichnet, daß die Trommel (9) einen dieAusgabeöffnung (17) enthaltenden, in einer vorbestimmten Stellung lösbar aufgesetzten Deckel (13) aufweist.

- 3 -

8. Fütterungsvorrichtung nach einem der vorhergehenden Ansprüche, dadurch gekennzeichnet, daß sie eine beweglich gelagerte Verschlußklappe (25) für die Ausgabeöffnung (17) aufweist, die unmittelbar durch die Trommel (9) zwischen einer wirksamen und einer unwirksamen Stellung in Abhängigkeit von der Trommeldrehbewegung verstellbar ist.

9. Fütterungsvorrichtung nach einem der vorhergehenden Ansprüche, dadurch gekennzeichnet, daß die mit im wesentlichen horizontaler Drehachse (22) gelagerte Trommel (9) kreiskegelstumpfförmig ausgebildet und die Ausgabeöffnung (17) im Bereiche ihrer Stirnseite in größerem Durchmesser angeordnet ist.

lo. Fütterungsvorrichtung nach einem der vorhergehenden Ansprüche, dadurch gekennzeichnet, daß die Trommel (9) in einem sie allseitig umschließenden Gehäuse (1) gelagert ist, das eine abnehmbar und die Entnahme der Trommel (9) gestattende Haube (27) sowie einen mit der Auslauföffnung (17) der Trommel (9) in Verbindung stehenden Futterauslaß (5o) aufweist.

11. Fütterungsvorrichtung nach einem der vorhergehenden Ansprüche, dadurch gekennzeichnet, daß die Antriebsvorrichtung (2) ein vorprogrammierbares Zeitschaltwerk (33) aufweist, durch das zu programmierten Zeitpunkten wenigstens ein in einem Außenstromkreis einfügbares, elektrisches Kontaktpaar schaltbar ist.

- 4 -

12. Fütterungsvorrichtung nach Anspruch 11, dadurch gekennzeichnet, daß zwischen der Trommel (9) und der Antriebsvorrichtung (2) eine lösbare Kupplung (31, 32) angeordnet ist, deren Einrückung durch das Zeitschaltwerk (33) gesteuert ist.

13. Fütterungsvorrichtung nach Anspruch 12, dadurch gekennzeichnet, daß die Trommel (9) mit einer mit einem Ritzel (31) der Antriebsvorrichtung (2) zusammenwirkenden Antriebsverzahnung (29) versehen ist, die an einer vorbestimmten Stelle eine Lücke (32) aufweist, und daß die Trommel (9) durch eine von dem Zeitschaltwerk (33) angesteuerte Schaltklinke (44) bei in der Verzahnungslücke (32) stehendem Ritzel (31) um einen das Ritzel (31) in Eingriff mit der Antriebsverzahnung (29) bringenden Winkelwert weiterschaltbar ist.

14. Fütterungsvorrichtung nach Anspruch 11, dadurch gekennzeichnet, daß das Kontaktpaar mit den Kontakten (51) einer Steckdose (53) verbunden ist.

15. Fütterungsvorrichtung nach Anspruch 14, dadurch gekennzeichnet, daß die Steckdose (53) im Zuge der Netzzuleitung (55) der Antriebsvorrichtung (2) liegt.

FIG.1

IV

12    13

24

45    28    16

22    20    17

23

21    19

18    15

9    14

**FIG.2**

IV

II

13

16    12

17

18    19

II

**FIG.4**

41    34

35

36

6    6    1

**FIG.3**

0022449

FIG.5

FIG.6

FIG.7

FIG.8